# EUROPÄISCHE PATENTSCHRIFT

(11) **EP 1 942 718 B1**
(45) Veröffentlichungstag und Bekanntmachung des Hinweises auf die Patenterteilung: **20.03.2013**
(21) Anmeldenummer: 06806009.4
(22) Anmeldetag: 04.10.2006
(51) Int. Cl.: A01D 57/02, A01D 80/02

(54) **ZINKEN FÜR EIN LANDWIRTSCHAFTLICHES GERÄT**
PRONGS FOR AN AGRICULTURAL IMPLEMENT
DENT POUR APPAREIL AGRICOLE

(30) Priorität: 31.10.2005 DE 102005052394
(43) Veröffentlichungstag der Anmeldung: 16.07.2008
(73) Patentinhaber: Schumacher, Gustav, 57612 Eichelhardt (DE)
(72) Erfinder: SCHUMACHER, Friedrich-Wilhelm, 57612 Eichelhardt (DE)
(74) Vertreter: Müller, Thomas Michael
(86) Internationale Anmeldenummer: PCT/EP2006/009568
(87) Internationale Veröffentlichungsnummer: WO 2007/051514

(56) Entgegenhaltungen:
- DD-A1- 210 822
- DE-A1- 2 006 743
- GB-A- 2 126 066
- US-A- 4 038 810
- US-A- 4 901 511

## Beschreibung

Die Erfindung betrifft einen Zinken für ein landwirtschaftliches Gerät oder Arbeitsmaschine zur Anbringung an einem Tragkörper umfassend
- ein separates Greifelement, das aus einem Kunststoff besteht,
- ein separates Befestigungselement, das
- mit dem Greifelement verbunden ist,
- aus einem Federstahl besteht,
- einen Verbindungsabschnitt aufweist, der mit dem Greifelement verbunden ist,
- einen Befestigungsabschnitt aufweist, der zur Befestigung am Tragkörper dient,
- einen elastisch federnden Federabschnitt aufweist,
wobei das Befestigungselement aus einem Draht gebildet ist, wobei im Federabschnitt der Draht eine Wendel bildend gewunden ist.

Ein Zinken dieser Art zum Fördern von Wurzelfrüchten ist aus der DD 210 822 B bekannt.

Der erfindungsgemäße Zinken ist für eine Haspel einer Erntemaschine für Halmfrüchte gedacht. Die Haspel einer Erntemaschine umfasst in der Regel mehrere um ein Zentralrohr radial beabstandete und umfangsverteilte Tragkörper, die als Rohre oder sonstige Profile ausgebildet sein können und von entsprechenden Lagerarmen, die
mit dem Zentralrohr verbunden sind, drehbar getragen werden. Die Haspel ist um die Achse des Zentralrohres drehbar. Üblicherweise sind an einer Haspel für eine Arbeitsbreite von sechs Metern je Tragkörper mindestens 40 Zinken befestigt. Die Ausgestaltung der Zinken richtet sich nach dem Einsatz der Erntemaschine. So sind aus Federstahldraht hergestellte Zinken bekannt. Diese werden bei schwer zu erfassenden und in die Schneidwanne einzuziehenden Erntegütern, wie beispielsweise Getreide oder Gras, insbesondere wenn dieses aufgrund der Erntesituation liegend angeordnet ist, bevorzugt eingesetzt. Diese Zinken haben in der Regel zwischen ihrem Befestigungsabschnitt, mit dem sie an den Tragkörper befestigt sind, und dem Greifbereich, der stabförmig gestaltet ist und mit dem Erntegut in Kontakt tritt, zwei oder mehr Federwindungen, die bewirken, dass, wenn der Greifbereich stark belastet wird, dieser ausweichen kann. Für andere Erntegüter, insbesondere Leguminosen, beispielsweise Bohnen, werden bevorzugt Zinken aus Kunststoff eingesetzt, da diese Erntegüter meist sehr tief am Boden abgeschnitten werden müssen, um sämtliche Früchte zu erfassen. Oft werden hierzu sehr breite Schneidtische an den Erntemaschinen, beispielsweise einem Mähdrescher, eingesetzt, der einen flexiblen Mähbalken aufweist, welcher mit Bodenberührung vor dem Mähtisch geführt ist. Bei unebenem Boden beschreiben diese flexiblen Mähbalken eine vertikale Bewegung gegenüber dem Mähtisch, d.h. der Mähbalken wird vom Boden angehoben und nähert sich dem über ihm sich bewegenden Zinken. Dabei kann es zu Überschneidungen kommen, so dass die Zinken zwischen die hin- und hergehenden Messerklingen gelangen können. Sind Zinken aus Stahl im Einsatz, reißen die Klingen ab. Dabei kann die Messerschiene brechen und der Messerantrieb überlastet werden. Die hieraus entstehenden Reparaturzeiten sind bei der witterungsabhängigen Erntearbeit unerwünscht und der Zeitverlust hat häufig eine größere Auswirkung als die Kosten für die Reparatur. Aus solchem Grunde werden bei flexiblen Mähbalken oder für solche Einsatzbedingungen bevorzugt Zinken eingesetzt, die aus einem federnd elastischen Material, beispielsweise aus einem Nylonwerkstoff, bestehen, so dass, wenn ein solcher Zinken in den Schneidbereich des Messers gelangt, dieser durch die Messerklingen abgeschnitten bzw. gekürzt wird. Dabei kann am Mähmesser oder am Messerantrieb kein Schaden entstehen. Ein solcher Zinken kann beispielsweise während der dann üblichen Wartungsarbeiten ausgetauscht werden.

Verschiedene Ausführungsformen für Zinken für Haspel, die aus einem Kunststoff hergestellt sind, sind beispielsweise in der EP 0 475 405 A2 beschrieben. Der Zinken bildet für die Befestigung am Tragkörper eine geschlitzte Öse, die aufgefedert wird, so dass der Zinken mit seinem Befestigungsbereich nach dem Überschieben wieder zusammenfedern kann. In diesem Zustand erfolgt dann eine Befestigung desselben, beispielweise über Befestigungsbolzen und gegebenenfalls zusätzlich in Verbindung mit Klammern und Stiften, um eine Sicherung zu erzielen, da über den Tragkörper ein Drehmoment in den Zinken eingeleitet wird. Es besteht die Gefahr, dass bei der Anhäufung von Erntegut oder bei Auftreffen des Zinkens auf einen festen Gegenstand eine Überlastung eintreten kann. Anders als bei dem üblichen aus einem Federstahldraht hergestellten Zinken muss bei einem aus Kunststoff hergestellten Zinken der Werkstoff genügend federnd ausgebildet sein. Bei stärkerer Belastung kann dann aber eine Überdehnung eintreten und eine ungleichmäßige Umfangsstellung gegenüber dem Tragkörper eintreten. Im Endeffekt kann dies zum Abbrechen des Zinkens führen.

Zinken sind aber auch bei anderen landwirtschaftlichen Geräten als Haspeln von Erntemaschinen im Einsatz, beispielsweise bei Heuwendern.

Die DE 177 83 79 U1 beschreibt beispielsweise einen Federzinken für einen Graszelter, der an einem Tragkörper, beispielsweise einem Arm befestigt wird. Der Zinken ist einteilig aus einem Stahlstab gebogen. Er weist einen stabförmigen Greifabschnitt auf, der mit dem Gras in Kontakt tritt. Er weist ferner einen zu einer Öse gebogenen Befestigungsabschnitt auf, mit dem er durch eine Schraube am Tragkörper festlegbar ist. Zwischen dem Greifabschnitt und dem Befestigungsabschnitt befindet sich ein wendelartig verlaufender Federabschnitt. In die durch den wendelartigen Verlauf des Federabschnitts gebildete Öffnung greift zusätzlich eine ebenfalls am Tragkörper festgelegte Buchse ein. Der Zinken ist also am Tragkörper zweifach gesichert. Der stabförmige Greifabschnitt kann um die durch die Festlegung des Federabschnitts bestimmte Federachsen schwenkend einem Hindernis ausweichen. Durch die gewählte Festlegung soll ein Brechen des Zinkens vermieden werden.

Die DE 178 20 43 U1 beschreibt einen Zinken für eine Streuvorrichtung bzw. einen Zetter oder Rechen. Der stabförmige Zinken besteht aus einem elastischen Kunststoff. Je nach Festigkeitsanforderungen kann der stabförmige Zinken eine Verstärkungseinlage aufweisen. Die erforderlichen Biegeeigenschaften können aber auch durch eine entsprechende Gestaltung der Querschnitte erreicht werden. Der Zinken ist über Schrauben an einem Tragbügel oder dergleichen Tragkörper festgelegt.

Aufgabe der vorliegenden Erfindung ist es, einen Zinken bereitzustellen, der sowohl die Vorteile eines üblicherweise aus Kunststoff hergestellten Zinkens aufweist, d.h. mit dem Beschädigungen beispielsweise an einem Mähmesser vermieden werden können, welcher aber aus einem relativ festen Kunststoff hergestellt werden kann und trotzdem ein Ausweichen bei entsprechender Belastung ermöglicht, ohne dass eine Überlastung an dem aus Kunststoff hergestellten Teil entsteht. Gelöst wird diese Aufgabe erfindungsgemäß durch einen Zinken für ein landwirtschaftliches Gerät oder Arbeitsmaschine zur Anbringung an einem Tragkörper der eingangs genannten Art, wobei zusätzlich vorgesehen ist, dass der Federabschnitt zwischen Befestigungsabschnitt und Verbindungsabschnitt angeordnet ist, dass von beiden Enden der Wendel abstehende Drahtabschnitte, nämlich ein erster Drahtabschnitt und ein zweiter Drahtabschnitt, vorhanden sind, von denen der erste Drahtabschnitt den Befestigungsabschnitt bildet, und dass der zweite Drahtabschnitt den Verbindungsabschnitt bildet und zusammen mit dem Federabschnitt zur Verbindung mit dem Greifelement dient.

Günstig dabei ist, dass die Vorteile des üblichen Kunststoffzinkens und die Vorteile des üblichen, aus einem Federstahldraht hergestellten Zinkens in dem erfindungsgemäßen Zinken vereinigt wird. Durch diese Kombination wird erreicht, dass ein stabförmiges Greifelement aus Kunststoff für den Bereich zum Einsatz kommt, bei dem die Gefahr besteht, dass er mit anderen Maschinenkomponenten, beispielsweise einem Mähmesser, in Kontakt kommen kann. Es können keine Schädigungen eintreten, weil ein Abtrennen des Greifelements ohne Auswirkungen auf das Mähmesser möglich ist. Der Kunststoff lässt sich günstig von dem Mähmesser durchtrennen.

Gleichzeitig werden Überlastungen vermieden, weil über das Befestigungselement ein federnd nachgiebiger Bereich bereitgestellt wird, der im Falle einer großen Belastung gewährleistet, dass das Greifelement ausweichen kann.

Die Wendel ermöglicht ein Ausweichen und hat durch die Ausbildung aus einem Federstahldraht eine hohe Lebensdauer. Hierbei ist vorgesehen, dass der zweite Drahtabschnitt den Verbindungsabschnitt bildet und zusammen mit dem Federabschnitt zur Verbindung mit dem Greifelement dient.

Für eine erste Ausgestaltung ist vorgesehen, dass der Verbindungsabschnitt des Befestigungselementes in das Greifelement eingebettet ist und damit mit diesem unlösbar verbunden ist. Er kann beispielsweise beim Herstellen des Greifelementes in eine Spritzgussform mit eingelegt werden, so dass der Verbindungsabschnitt umspritzt wird. Er bildet damit die Ausnehmung in dem Greifelement, die seinen Verbindungsabschnitt aufnimmt, automatisch, wobei in diesem Bereich eine enge Verbindung eintritt.

Eine bevorzugte Ausführungsform sieht jedoch vor, dass das Greifelement mit dem Verbindungsabschnitt des Befestigungselementes lösbar verbunden ist. Hierdurch ist es möglich, das Greifelement, das aus Kunststoff hergestellt ist, für den Fall, dass es beschädigt sein sollte, ohne große Probleme auszutauschen und das aus dem Federstahl bestehende Befestigungselement weiter zu nutzen. Ein solcher Austausch ist einfach möglich und zudem stellt das aus einem Kunststoff hergestellte Greifelement ein kostengünstiges Bauteil dar. Die Kosten für den Austausch sind entsprechend gering.

Für die lösbare Befestigung ist in Ausgestaltung vorgesehen, dass das Greifelement an einem Ende eine Ausnehmung aufweist, in welche der Verbindungsabschnitt eingreift und in welcher er über Befestigungsmittel lösbar gehalten ist.

Eine günstige Ausgestaltung sieht vor, dass die Ausnehmung einen ersten Ausnehmungsabschnitt, in den der Drahtabschnitt eingreift, und einen zweiten Ausnehmungsabschnitt, in welchem die den Federabschnitt bildende Wendel zumindest teilweise aufgenommen ist, umfasst. Dabei ist es möglich, dass der zweite Aufnahmeabschnitt den Federabschnitt an dessen Enden quer zur Erzeugungsachse der Wendel durch Wandabschnitte hält. Gegebenenfalls weisen die Wandabschnitte jeweils eine Bohrung auf, durch die und den Federabschnitt hindurch ein Befestigungsbolzen geführt ist. Der Befestigungsbolzen kann durch eine Schraube mit oder ohne Mutter dargestellt sein.

Für eine besonders einfache Montage kann als Befestigungsmöglichkeit alternativ vorgesehen sein, dass die Wandabschnitte federnde Rastarme aufweisen oder bilden, die Rastnasen zum Eingriff mit dem Federabschnitt besitzen. Eine weitere Befestigungsmöglichkeit für das Greifelement am Befestigungselement sieht vor, dass der den Verbindungsabschnitt bildende zweite Drahtabschnitt gerade verläuft und die Ausnehmung einen ersten, dem zweiten Drahtabschnitt angepassten Ausnehmungsabschnitt in Form einer Bohrung und einen taschenförmigen zweiten Ausnehmungsabschnitt umfasst, in welchen eine Klemmsteinanordnung oder dergleichen Klemmmittel sitzen, die mit Hilfe einer Schraube oder unmittelbar selbst den Verbindungsabschnitt festsetzen.

Es kann vorgesehen sein, dass der Draht zur Bildung des Verbindungsabschnitts U-förmig gebogen ist und eine Schraube oder Stift vorgesehen sind, die zwischen den beiden ein U bildenden Schenkeln hindurchtreten und in Bohrungen des Greifelementes, die Ausnehmung, die taschenförmig gestaltet ist, durchquerend, sitzen. Hierdurch ergibt sich eine günstige Möglichkeit zur Fixierung. Neben der Fixierung über eine Schraube kann auch die Möglichkeit bestehen, einen der Schenkel so federnd auszubilden, dass er beispielsweise in eine Vertiefung in der Ausnehmung eingreifen kann und somit eine Fixierung ermöglicht. Wenn dann beispielsweise diese Vertiefung von außen über eine Bohrung zugänglich ist, kann ein Werkzeug genutzt werden, um von außen in die Bohrung eingeführt zu werden und die beiden Schenkel so zueinander zu drücken, dass ein Abziehen des Greifelementes möglich ist.

Der Befestigungsabschnitt des Befestigungselementes wird bevorzugt dadurch gebildet, dass der Draht zu einer Öse gebogen ist, durch die beispielsweise eine Schraube oder ein Stift oder dergleichen Mittel hindurchgeführt werden können, um den Haspelzinken am Tragkörper der Haspel festzulegen. Es können aber auch die Befestigungselemente zweier Zinken so miteinander verbunden sein, dass sie einen gemeinsamen Befestigungsabschnitt aufweisen.

Das Greifelement kann je nach Einsatzfall in dem Bereich, der mit dem Erntegut in Kontakt tritt mit winklig zueinander stehenden Abschnitten gerade verlaufen oder gebogen sein und weist eine konvexe und eine konkave Seite auf. Es können Profilierungen vorgesehen sein, um eine steifere Gestaltung des aus Kunststoff hergestellten Greifelementes zu erzielen. Da die Federeigenschaften dem Befestigungselement zugeordnet sind, ist eine solche steifere Ausbildung möglich, ohne dass die positiven Eigenschaften des aus Kunststoff hergestellten Greifelementes verlassen werden. Es sind aber beliebige Profilformen, die zu einer steifen Ausbildung führen, wählbar.

Die Ausnehmung zur Aufnahme des Verbindungsabschnittes des Befestigungselementes befindet sich vorzugsweise in einem verdickten Abschnitt des Greifelementes.

Je nach Anwendung kann das Greifelement stabförmig oder nach Art eines Paddelblattes flächig gestaltet sein. Solche blattförmigen Greifelemente werden bei empfindlichen Erntegütern, beispielsweise Sonnenblumen, eingesetzt.

Verschiedene Ausführungsformen von Zinken sind in der Zeichnung schematisch dargestellt und werden nachfolgend anhand derselben näher erläutert.

Es zeigt
- Figur 1: eine Seitenansicht eines an einem Tragkörper befestigten Zinkens in einer nicht erfindungsgemäßen ersten Ausführung, bei der ein Befestigungselement und das stabförmige Greifelement unlösbar miteinander verbunden sind, und
- Figur 2: eine Rückansicht auf den Zinken gemäß Figur 1, montiert an dem Tragkörper,
- Figur 3: eine Seitenansicht einer nicht erfindungsgemäßen zweiten Ausführungsform eines Zinkens, wobei jedoch das Befestigungselement und das stabförmige Greifelement noch voneinander getrennt sind, aber lösbar miteinander verbunden werden können,
- Figur 4: eine Ansicht in Pfeilrichtung A von Figur 3, wobei der Federabschnitt aus einem wendelförmig gewundenen Draht besteht,
- Figur 5: eine nicht erfindungsgemäße dritte Ausführungsform gemäß der Erfindung, wobei das Befestigungselement aus einem Flachmaterial aus Federstahl besteht und ebenfalls noch von dem zugehörigen stabförmigen Greifelement getrennt dargestellt ist,
- Figur 6: eine Ansicht in Pfeilrichtung B von Figur 5,
- Figur 7: eine nicht erfindungsgemäße vierte Ausführungsform eines Zinkens gemäß der Erfindung in Seitenansicht mit einem gegenüber Figur 1 abgewandelten stabförmigen Greifelement,
- Figur 8: eine Rückansicht zu Figur 7,
- Figur 9: eine nicht erfindungsgemäße fünfte Ausführungsform eines Zinkens in Seitenansicht ähnlich Figuren 5 und 6 jedoch einem gegenüber diesen Figuren abgewandelten Greifelement,
- Figur 10: eine Rückansicht zu Figur 9,
- Figur 11: eine nicht erfindungsgemäße sechste Ausführungsform, bei der zwei Zinken zu einem Doppelzinken zusammengefasst sind,
- Figur 12: eine nicht erfindungsgemäße siebte Ausführungsform eines Zinkens mit einem paddelblattartig gestalteten Greifelement in Seitenansicht,
- Figur 13: eine Rückansicht zu Figur 12,
- Figur 14: eine Seitenansicht einer nicht erfindungsgemäßen achten Ausführungsform, bei der die Festlegung des Greifelements am Befestigungselement durch eine Klemmsteinanordnung mit Schraube erfolgt,
- Figur 15: eine Rückansicht zu Figur 14,
- Figur 16: eine zur Ausführung gemäß Figuren 14 und 15 abgewandelte nicht erfindungsgemäße neunte Ausführungsform, bei der das Greifelement mit einem Abweiser versehen ist, in Seitenansicht,
- Figur 17: eine Rückansicht zu Figur 16,
- Figur 18: eine erfindungsgemäße zehnte Ausführungsform in Seitenansicht, bei der Rastnasen an federnden Rastarmen mit dem zu einer Wendel geformten Federabschnitt in Eingriff bringbar ist, um das Greifelement am Befestigungselement festzulegen,
- Figur 19: eine Rückenansicht zu Figur 18,
- Figur 20: eine zur zehnten Ausführungsform abgewandelte erfindungsgemäße Ausführungsform in Seitenansicht, bei der anstelle oder zusätzlich zu den Rastarmen mit Rastnasen ein Befestigungsbolzen vorgesehen ist, und
- Figur 21: eine Rückansicht zu Figur 20.

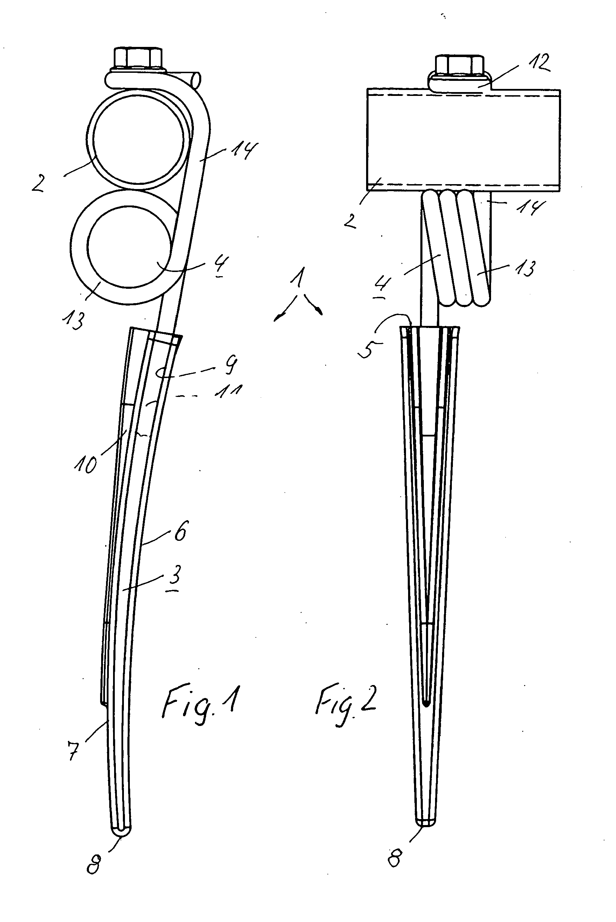

Nachfolgend wird eine erste Ausführungsform eines Zinkens anhand der Figuren 1 und 2 näher erläutert.

In den Figuren 1 und 2 ist ein Zinken 1 in Zuordnung zu einem Tragkörper 2 dargestellt. Der Tragkörper 2 ist ein Rohr, das beispielsweise an Tragelementen einer Haspel mit radialem Abstand zur Drehachse der Haspel drehbar festgelegt ist. Über die Drehbewegung des Tragkörpers 2 kann die Stellung des Zinkens 1 über den Drehweg der Haspel im Verhältnis zum Boden und damit auch zum Erntegut verändert werden. Der Tragkörper kann auch bei anderen Anwendungen des Zinkens eine andere Form aufweisen.

Der Zinken 1 besteht im wesentlichen aus dem Greifelement 3 und dem Befestigungselement 4, die beim vorliegenden Ausführungsbeispielen gemäß Figuren 1 und 2 unlösbar miteinander verbunden sind. Das Greifelement 3 weist dem Befestigungselement 4 und damit dem Tragkörper 2 zugewandt ein erstes Ende 5 auf, das einen verdickten Abschnitt bildet. Es erstreckt sich als eine Art länglicher Stab vom ersten Ende 5 bis zum davon entfernten zweiten Ende 8. Das Greifelement 3 ist bei diesem Ausführungsbeispiel leicht gebogen, so dass es eine konkave Seite 6, die mit dem Erntegut in Kontakt tritt, und dieser abgewandt eine konvexe Seite 7 aufweist. Es können ausgehend von dem ersten Ende 5 in Richtung zum zweiten Ende Profilierungen 10 vorgesehen sein. Diese enden jedoch vor dem zweiten Ende 8. Zur steiferen Ausbildung und auch zur Materialersparnis kann das Greifelement 3 als T-förmiges, U-förmiges, H-förmiges oder ähnliches Profil gestaltet sein.

Zum ersten Ende 5 hin bildet das Greifelement 3 eine Ausnehmung 9, in die ein Verbindungsabschnitt 11 des aus einem Federstahldraht hergestellten Befestigungselementes 4 eingreift. Der Verbindungsabschnitt 11 und das Greifelement 3 sind dadurch unlösbar miteinander verbunden, dass bei der Herstellung des aus Kunststoff bestehenden Greifelementes 3 durch Spritzformen der Verbindungsabschnitt 11 des Befestigungselementes 4 umspritzt worden ist, d.h. in das Greifelement 3 eingebettet ist. Zur Verbesserung des Haltes können beispielsweise Ausformungen oder auf der Oberfläche des Verbindungsabschnitts 11 aufrauhende Vorsprünge vorgesehen sein. Es ist erkennbar, dass ein erheblicher Längenabschnitt des Greifelementes 3 aus Kunststoff über das Ende des Verbindungsabschnitts 11, mit dem das Befestigungselement 4 in das Greifelement 3 eintaucht, vorsteht, so dass genügend Länge bereitgestellt wird, die beispielsweise bei einer Anwendung bei einer Erntemaschine und einer relativen Lageveränderung von Mähmesser und Haspel zueinander abgeschert werden kann.

Das Befestigungselement 4 weist ferner einen Befestigungsabschnitt 12 auf, der beispielsweise eine Öse bildet, durch die eine Schraube zur Befestigung des Zinkens 1 am Tragkörper 2 hindurchtreten kann. Im Bereich zwischen dem Verbindungsabschnitt 11 und dem Befestigungsabschnitt 12 ist das Befestigungselement mit einem Federabschnitt 13 versehen. Dieser Federabschnitt 13 stellt praktisch eine Schraubenfeder dar, deren Erzeugungsachse im wesentlichen parallel zur Längsachse des Tragkörpers 2 ausgerichtet ist bzw. sich rechtwinklig zum Verlauf des Greifelementes 3 erstreckt. Hierdurch ist es möglich, dass übermäßige Belastungen oder Stoßbelastungen, die auf das Greifelement 3 einwirken, federnd durch den Federabschnitt 13 aufgenommen werden können. Das Greifelement 3 kann ausweichen und ist so vor Überlastungen geschützt. Damit ist es auch möglich, das Greifelement 3 selbst nicht aus einem flexiblen Kunststoff herstellen zu müssen, sondern dieses aus einem relativ steifen Kunststoff herzustellen und steif auszulegen. Die nachgiebigen Eigenschaften werden von dem aus einem Federstahl hergestellten Befestigungselement 4 bereitgestellt. Zwischen dem Federabschnitt 13 und dem ösenförmig gestalteten Befestigungsabschnitt 12 befindet sich ein Übergangsabschnitt 14, der beim gezeigten Ausführungsbeispiel dafür sorgt, dass der nötige Abstand zwischen dem Federabschnitt 13 und dem Befestigungsabschnitt 12 gegeben ist, um dazwischen den Tragkörper 2 aufzunehmen. Der Tragkörper 2 kann im übrigen eine beliebige Gestalt aufweisen. Er ist nicht darauf beschränkt rund ausgebildet zu sein. Es kommt auch eine Leistenform oder dergleichen Form in Frage. Dabei ist dann gegebenenfalls der Befestigungsabschnitt 12 an dessen Form anzupassen. Bei anderen Verbindungsarten zum Tragkörper kann auf einen solchen Übergangsabschnitt verzichtet werden.

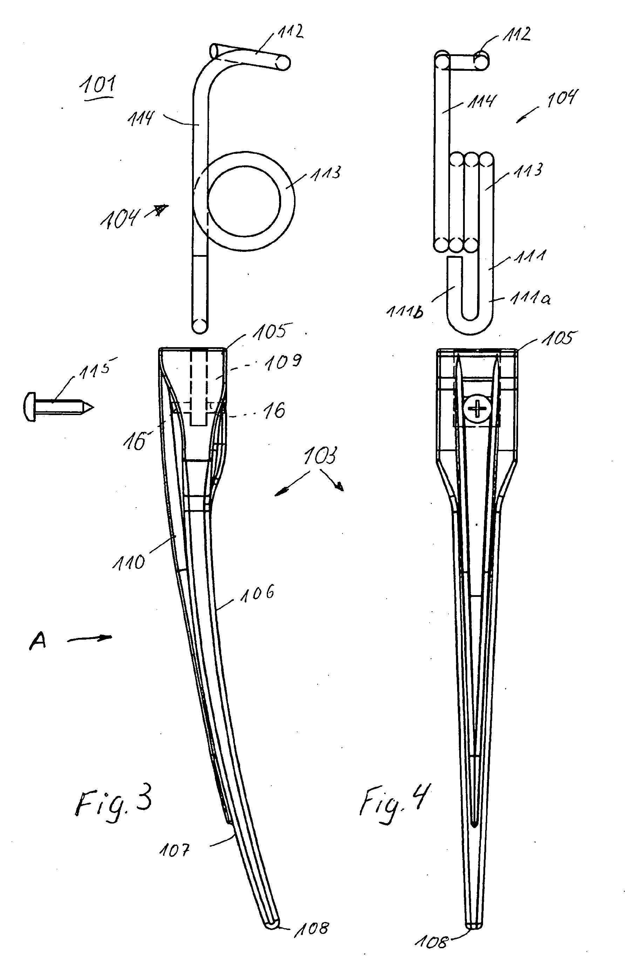

Nachfolgend wird das zweite Ausführungsbeispiel eines Zinkens 101 unter Bezugnahme auf die Figuren 3 und 4 näher beschrieben. Der wesentliche Unterschied zwischen der Ausführungsform gemäß Figuren 1 und 2 besteht darin, dass bei der Ausführungsform gemäß Figuren 3 und 4 das aus Kunststoff hergestellte Greifelement 103 des Zinkens 101 ein vom Befestigungselement 104 aus Federstahl lösbares separates Bauteil ist. Der Zinken 101 besteht damit aus zwei von einander separat gestalteten Elementen, nämlich dem Greifelement 103 und dem Befestigungselement 104. Darüber hinaus ist das Greifelement 103 im Bereich seines als verdickter Abschnitt gebildeten ersten Endes 105 abweichend gestaltet. In diesem Bereich ist eine Ausnehmung 109 vorgesehen, in welcher das Befestigungselement 104 mit dem Verbindungsabschnitt 111 lösbar aufgenommen werden kann, wozu das Befestigungselement 104 im Bereich des Verbindungsabschnittes 111 U-förmig gestaltet ist , d.h. der das Befestigungselement 104 bildende Federstahldraht ist U-förmig gebogen, so dass ein erster Schenkel 111 a und ein zweiter Schenkel 111 b, der parallel dazu verläuft, gebildet werden, die untereinander durch einen U-Bogen verbunden sind.

Der Zwischenraum zwischen den beiden Schenkeln 111a, 111b wird genutzt, um dann, wenn der Verbindungsabschnitt 111 in die Ausnehmung 109 eingeführt ist, eine Schraube 15 hindurch zu stecken. Hierzu besitzt das Greifelement 103 eine die Ausnehmung 109 kreuzende Bohrung 16, die beidseitig der als eine Art Tasche gestalteten Ausnehmung 109 Bohrungsabschnitte aufweist, so dass der Schaft der Schraube 15 zwischen den beiden Schenkeln 111a und 111b hindurchtreten kann und nahe zu dem U-förmigen Bogen liegt, so dass im wesentlichen Spielfreiheit gegeben ist. Darüber hinaus können die beiden Schenkel 111 a und 111 b einander gegenüber so verlaufen, dass eine Vorspannung von diesen auf die Begrenzung der Ausnehmung 109 ausgeübt wird, um das Greifelement 103 im wesentlichen spielfrei in der Ausnehmung 109 zu halten. Die Schraube 15 kann als Kopfschraube mit einem selbstschneidenden Gewinde ausgebildet sein, die ihr Gewinde selbst in die Bohrungen 16 beidseitig der Ausnehmung 109 einschneidet. Hierdurch ist es möglich, für den Fall, dass in Richtung zum zweiten Ende 108 ein Teilabschnitt abgeschert wird, das Greifelement 103 alleine auszutauschen. Dies kann einfach durch Lösen der Schraube 15 und Befestigen eines neuen Greifelements 103 geschehen. Im übrigen entsprechen im wesentlichen die weiteren Bauteile und Abschnitte sowohl des Greifelementes 103 als auch des Befestigungselementes 104 der Ausbildung gemäß Figuren 1 und 2, wozu bei vergleichbaren Teilen zu den Figuren 3 und 4 Bezugszeichen gewählt worden sind, die zu denen bei der Ausführungsform gemäß Figuren 1 und 2 um den Zahlenwert 100 erhöht sind. Zu deren Beschreibung wird dabei zusätzlich auf die Beschreibung zu den Figuren 1 und 2 verwiesen.

Im übrigen kommen für die Befestigung des Greifelements 103 auch andere Ausbildungen als eine Schraube 15 in Frage. So wäre es auch möglich, die beiden Schenkel 111 a und 111 b unter einem Winkel zueinander verlaufen zu lassen und in der Ausnehmung 109 einen Hinterschnitt vorzusehen, hinter den sich das Ende des Schenkels 111 b setzt, so dass eine Sicherung gegen Auszug gegeben ist. Durch ein Werkzeug, beispielsweise einen Schraubendreher, kann dann, soweit eine entsprechende Aussparung vorgesehen ist, eine Verformung des Schenkels 111 b derart erfolgen, dass er in Richtung des Schenkels 111a wandert und damit außer Eingriff zu dem durch den Hinterschnitt gebildeten Vorsprung kommt und das Greifelement 103 von dem Befestigungselement 104 abgezogen werden kann.

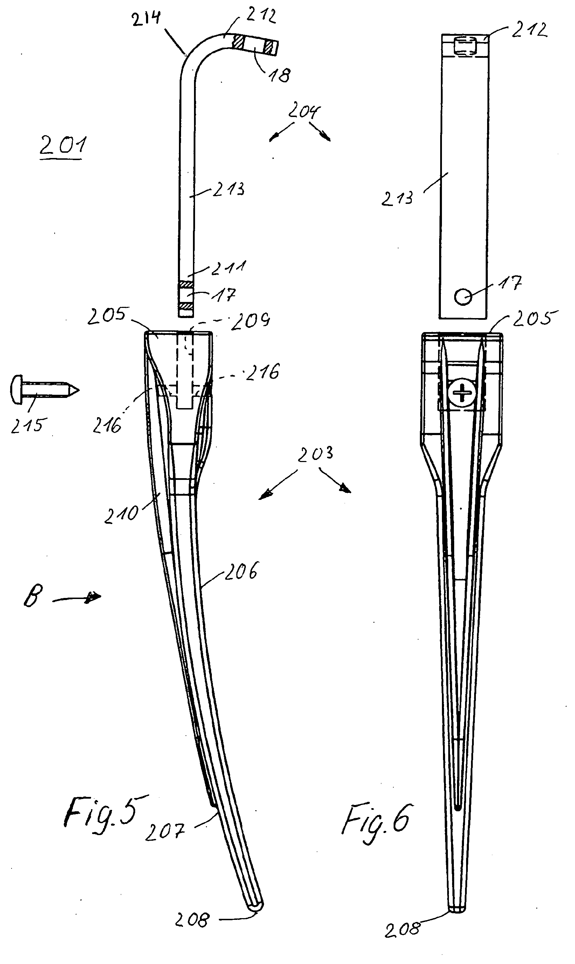

Nachfolgend wird eine dritte Ausführungsform eines Zinkens 201 gemäß Figuren 5 und 6 beschrieben, wobei das Greifelement 203 dem Greifelement 103 gemäß Figuren 3 und 4 entspricht. Aus diesem Grunde sind bei dem Greifelement gemäß Figuren 5 und 6 Positionszeichen gewählt, die um den Zahlenwert 100 zu denen der Ausführungsform gemäß Figuren 3 und 4 erhöht sind. Zu deren Beschreibung wird daher auf die Beschreibung im Zusammenhang mit den Figuren 3 und 4 verwiesen.

Abweichend zu der Ausführungsform gemäß Figuren 3 und 4 ist jedoch bei den Figuren 5 und 6 das Befestigungselement 204 des Zinkens 201 gestaltet. Bei dieser Ausführungsform ist das Befestigungselement 204 als eine Art Blattfeder aus einem Federstahl geformt. Es weist einen Verbindungsabschnitt 211 mit einer Durchgangsbohrung 17 auf, wobei der Verbindungsabschnitt 211 in die Ausnehmung 209 des Greifelementes 203 eintritt. Das als Schraube gestaltete Befestigungsmittel 215 tritt in die Bohrung 216 ein und wird durch die Durchgangsbohrung 17 hindurchgeführt. Hierdurch wird das Greifelement 203 an dem Befestigungselement 204 festgelegt. Ausgehend von dem in die Ausnehmung 209 eintauchenden Verbindungsabschnitt 211 ist in Richtung zu dem Befestigungsabschnitt 212 ein blattfederartig wirkender Federabschnitt 213 vorhanden. Der Querschnitt des Befestigungselementes 204 im Bereich des Federabschnittes 213 ist so gehalten, dass bei Belastung des Greifelementes 203 im Bereich der konkaven Seite 206 ein elastisches Durchbiegen des Federabschnittes 213 erfolgt, d.h. dass der Querschnitt in Richtung von der konkaven Seite 206 zur konvexen Seite 207 das Befestigungselement im Bereich des Federabschnittes 213 eine geringere Materialstärke aufweist als quer dazu. Im Bereich zwischen dem Federabschnitt 213 und dem Befestigungsabschnitt 212 befindet sich ein gebogener Übergangsabschnitt 214, der beispielsweise an einen entsprechend Figur 1 gestalteten Tragkörper angepasst ist. Anstelle der ösenförmigen Gestaltung des Befestigungsabschnittes bei der Ausführungsform gemäß Figuren 1 bis 4 ist bei der Ausführungsform gemäß Figuren 5 und 6 ein Loch 18 vorgesehen, durch welches beispielsweise ein Befestigungselement zur Festlegung des Haspelzinkens 201 an einem Tragkörper hindurchgeführt werden kann. Während bei den Ausführungsformen gemäß Figuren 1 bis 4 eine Nachgiebigkeit des Federabschnittes bei Belastung der konkaven Seite 206 und quer dazu gegeben ist, so dass auch ein seitliches Ausweichen des Greifelementes 203 möglich ist, ist bei der Ausführungsform gemäß Figuren 5 und 5 ein Ausweichen im wesentlichen nur bei der Belastung der konkaven Seite 206 gegeben, d.h. in der Zeichenebene der Figur 5 erfolgt ein Ausschwenken nur in seitlicher Richtung nach links und rechts unter Nutzung der Federeigenschaften des Federabschnittes 213.

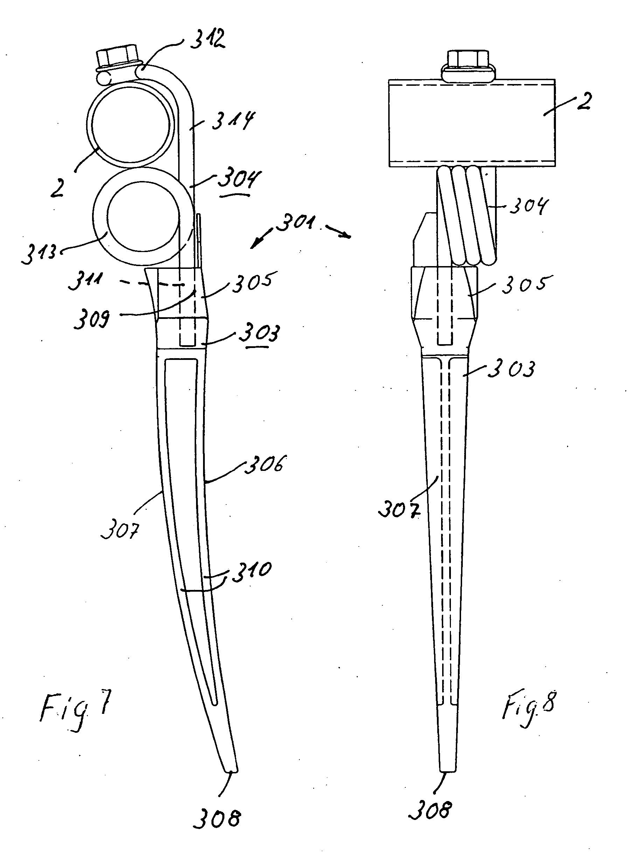

in den Figuren 7 und 8 ist eine vierte Ausführungsform eines Zinkens 301 in Seiten- bzw. Rückansicht dargestellt. Dieser Zinken 301 unterscheidet sich von der Ausführungsform gemäß Figuren 1 und 2 lediglich durch eine abgeänderte Gestaltung des Greifelementes 303. Im übrigen sind Teile und Abschnitte der Bauteile, die mit denen gemäß der Ausführungsform nach den Figuren 1 und 2 übereinstimmen, mit Positionszeichen versehen, die um den Zahlenwert 300 gegenüber denen gemäß Figuren 1 und 2 erhöht sind. Zu deren Beschreibung wird auf die Beschreibung zu den Figuren 1 und 2 verwiesen. Im Unterschied zu der Ausführungsform gemäß Figuren 1 und 2 ist bei den Figuren 7 und 8 das Greifelement 303 zwar ebenfalls stabförmig gestaltet, jedoch anstelle der auf der konvexen Seite angeordneten Rippen bei Figuren 1 und 2 sind Profilierungen 310 vorgesehen, die im Querschnitt zu einer H-Form beim Greifelement 303 führen. Die Profilierungen 310 führen ebenfalls zu einer Versteifung in Verbindung mit dem zwischen ihnen liegenden Steg. Auch bei den Figuren 7 und 8 ist, wie bei den Figuren 1 und 2, das Greifelement 303 unlösbar, d.h. nicht ohne Zerstörung, lösbar mit dem Befestigungselement 304 verbunden.

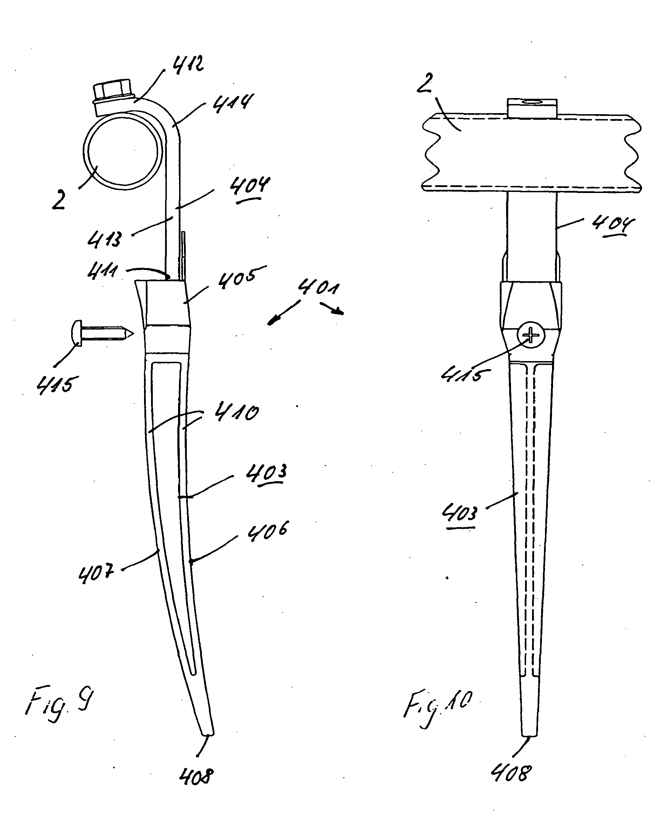

Die Figuren 9 und 10 zeigen Ansichten einer fünften Ausführungsform eines Zinkens 401, wobei Teile und Abschnitte, die denen der Ausführungsform gemäß Figuren 5 und 6 entsprechen, mit Positionszahlen versehen sind, die zu denen gemäß Figuren 5 und 6 um den Zahlenwert 200 erhöht sind. Bei dem Zinken 401 gemäß Figuren 9 und 10 entspricht die Ausbildung des Befestigungselementes 404 dem von Figuren 5 und 6, d.h. auch dieses weist, wie bei den Figuren 5 und 6, beim Befestigungsabschnitt 412 das aus Figur 5 ersichtliche Loch 18 und darüber hinaus beim Verbindungsabschnitt die Durchgangsbohrung 17 gemäß Figur 5 auf, um durch diese hindurch die als Befestigungsmittel dienende Schraube 415 das Greifelement 403 mit dem Befestigungselement 404 lösbar zu verbinden. Das Befestigungselement 404 ist ebenfalls blattfederartig, wie bei der Ausführungsform gemäß Figuren 5 und 6, gestaltet. Die Gestaltung des Greifelementes 403 unterscheidet sich im wesentlichen von der gemäß Figuren 5 und 6 nur dadurch, dass keine Rippen vorgesehen sind, die sich auf der konvexen Seite befinden, sondern es wird eine Profilierung 410 in Form eines H-förmigen Querschnittes erzielt.

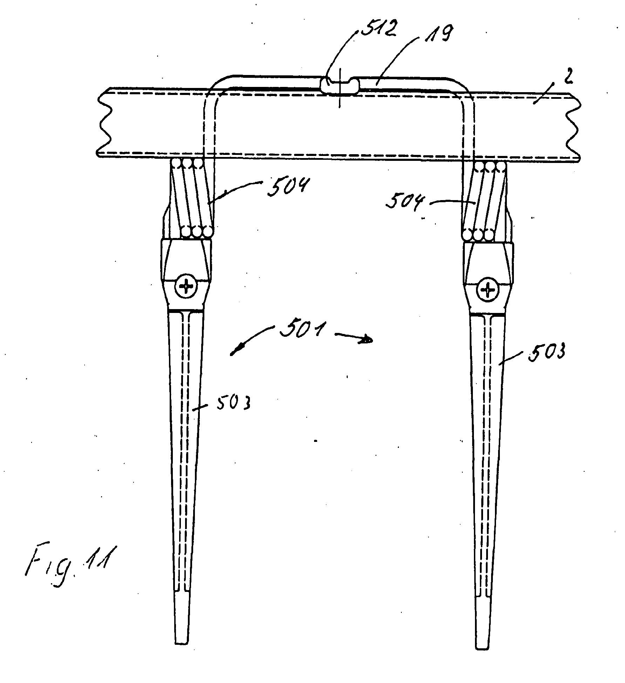

Figur 11 zeigt eine sechste Ausführungsform, bei der zwei Zinken 501 derart miteinander gekoppelt sind, dass sie gemeinsam an einem Tragkörper 2 befestigt werden können. Dabei entsprechen die beiden Greifelemente 503 dem gemäß Figuren 3 und 4 mit den im Zusammenhang mit den Figuren 9 und 10 beschriebenen Abwandlungen. Bei der Ausführungsform gemäß Figur 11 entspricht der Aufbau des Befestigungselements 504 dem, wie er im Zusammenhang mit den Figuren 3 und 4 für das Befestigungselement 104 beschrieben wurde. Der Unterschied besteht darin, dass zwei Befestigungselemente 504 durch einen Überbrückungsabschnitt 19 miteinander verbunden sind. Dieser Überbrückungsabschnitt 19 weist auch den Befestigungsabschnitt 512 auf. Dieser Befestigungsabschnitt 512 ist ebenfalls ösenförmig gestaltet, so dass eine Festlegung des sogenannten Doppelzinkens, zwei Haspelzinken 501 umfassend, gemeinsam an dem Tragkörper 2 durch eine Schraube erfolgen kann. Der Überbrückungsabschnitt 19 ist so bemessen, dass die beiden Haspelzinken 501 auf dem erforderlichen Abstand gehalten sind.

Die Ausgestaltung der beiden Befestigungselemente 504 entspricht ansonsten der des Befestigungselementes 104 gemäß Figuren 3 und 4, so dass zu dessen Beschreibung auf die Beschreibung zu diesen Figuren verwiesen wird.

Dies gilt auch für die Ausgestaltung der Verbindung zwischen dem Befestigungselement 504 und dem jeweiligen Greifelement 503.

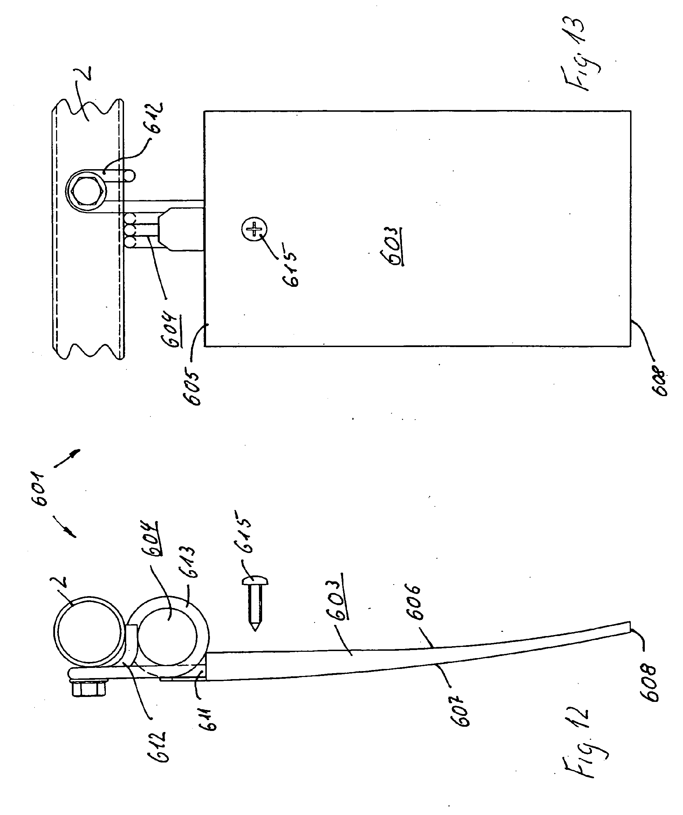

Die Figuren 12 und 13 zeigen Ansichten einer siebten Ausführungsform eines Zinkens 601, wobei das Greifelement 603 im Unterschied zu dem gemäß Figuren 3 und 4 nach Art eines Paddelblattes flächig gestaltet ist.

Die Verbindung zwischen dem Befestigungselement 604 und dem Greifelement 603 entspricht der im Zusammenhang mit den Figuren 3 und 4 beschriebenen Ausführung, so dass hinsichtlich deren Beschreibung auf die Beschreibung zu den Figuren 3 und 4 verwiesen wird.

Das Befestigungselement 604 unterscheidet sich von dem gemäß Figuren 3 und 4 lediglich durch die Ausgestaltung des Befestigungsabschnittes 612. Bei der Ausführungsform gemäß Figuren 12 und 13 ist ebenfalls eine Ösenform für die Befestigung am Tragkörper 2 gewählt, jedoch liegt die zur Befestigung des Befestigungselementes 604 am Tragkörper 2 dienende Schraube, die durch den Befestigungsabschnitt 612 in Form der Öse hindurchgeführt ist, praktisch in Verlängerung des Verbindungsabschnittes 611.

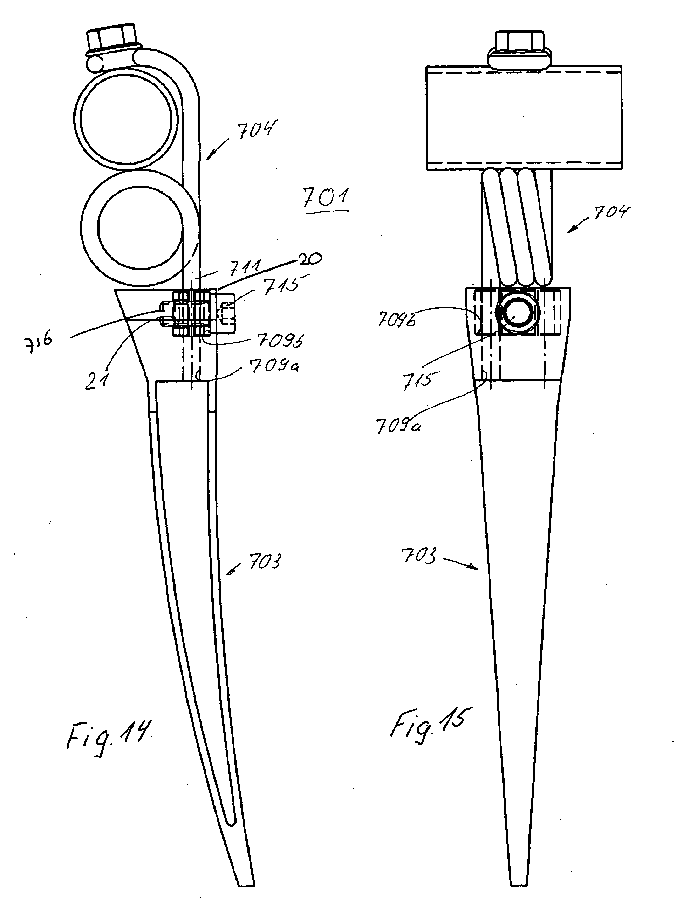

Die Figuren 14 und 15 betreffen eine achte Ausführungsform eines Zinkens, wobei das Befestigungselement 704 im Unterschied zur Ausführung z.B. nach den Figuren 3 und 4 einen gerade verlaufenden Verbindungsabschnitt 711 aufweist. Zur Herstellung einer festen Verbindung zwischen dem Greifelement 703 und dem Befestigungselement 704 dient eine Klemmsteinanordnung 20, die durch eine Schraube 715 gegen den Verbindungsabschnitt 711 verspannt wird. Das Greifelement 703 weist eine Ausnehmung 709 auf, welche einen ersten Ausnehmungsabschnitt 709a besitzt, der einen Endabschnitt des Verbindungsabschnitts 711 aufnimmt, und einen zweiten Ausnehmungsabschnitt 709b besitzt, der die Klemmsteinanordnung 20 aufnimmt. Die Klemmsteinanordnung 20 besitzt eine Gewindebohrung 21. In den zweiten Ausnehmungsabschnitt 709b mündet eine Bohrung 716, durch die die Schraube 715 in die Gewindebohrung 21 der Klemmsteinanordnung 20 einführbar ist. Der Verbindungsabschnitt 711 des Befestigungselements 704 wird bis in den daran angepassten ersten Ausnehmungsabschnitt eingeführt und zwischen der Klemmsteinanordnung 20 durch Festziehen der Schraube 715 eingeklemmt gehalten.

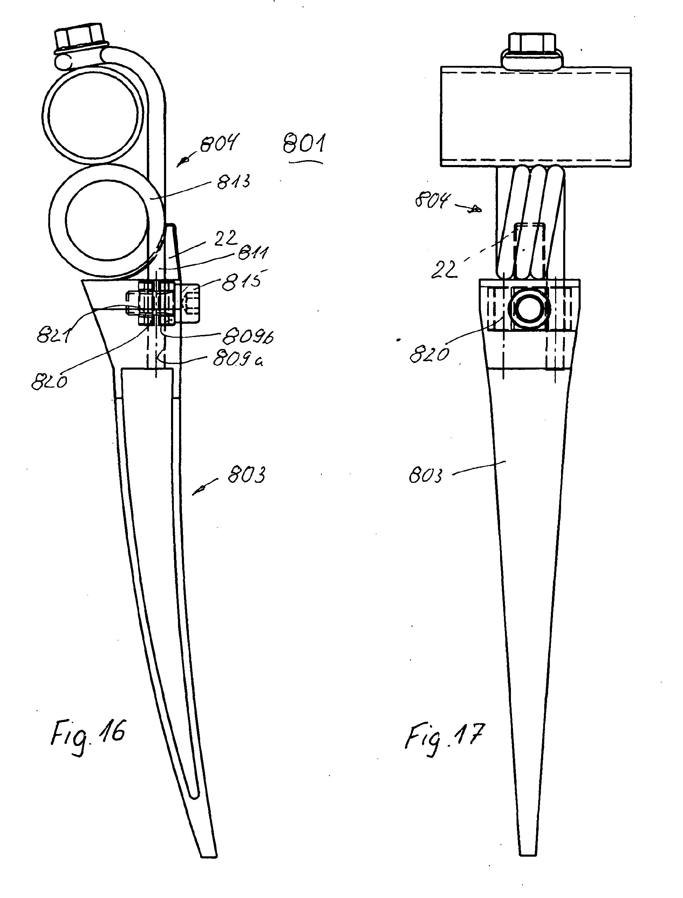

Die in Figur 16 und 17 gezeigte neunte Ausführungsform eines Zinkens 801 unterscheidet sich von der gemäß Figuren 14 und 15 im wesentlichen dadurch, dass zusätzlich ist ein Abweiser 22 vorgesehen ist, der vor dem wendelförmigen Federabschnitt 813 des Befestigungselements 804 liegt und verhindern soll, dass Erntegut zwischen die Windungen des Federabschnitts 813 eindringt. Im übrigen sind die wesentlichen Abschnitte und Bauteile mit Positionsnummern versehen, die zu denen gemäß Figuren 14 und 15 um den Zahlenwert 100 bzw. 800 erhöht sind. Zu deren Beschreibung wird auf die zu den Figuren 14 und 15 verwiesen.

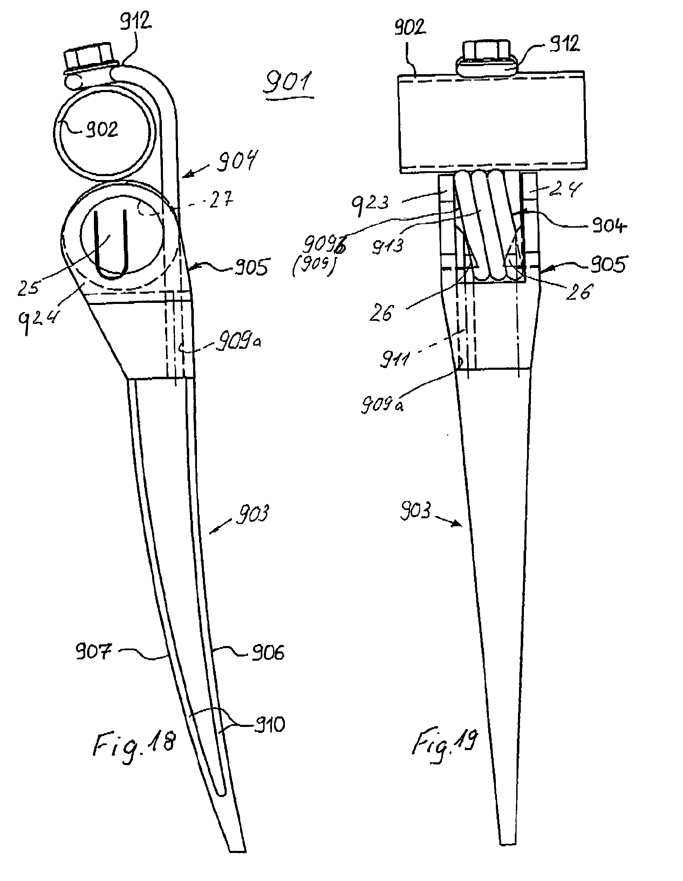

Die Figuren 18 und 19 zeigen eine erfindungsgemäße zehnte Ausführungsform eines Zinkens 901, bei der das Befestigungselement 904 dem bei der der achten Ausführungsform entspricht. Unterschiedlich ist jedoch die Verbindung zwischen dem Greifelement 903 und dem Befestigungselement 904 gestaltet. Das Greifelement 903 weist eine Ausnehmung 909 auf, welche einen ersten Ausnehmungsabschnitt 909a, der durch eine Bohrung zur Aufnahme des Verbindungsabschnitts 911 dargestellt ist. Der zweite Ausnehmungsabschnitt 909b wird seitlich nur durch zwei Wandabschnitte, nämlich den ersten Wandabschnitt 23 und den zweiten Wandabschnitt 24 begrenzt. Zusätzlich ist an jedem Wandabschnitt 23, 24 ein federnder Rastarm 25 mit einer in den zweiten Ausnehmungsabschnitt 909b vorstehenden Rastnase 26 gebildet. Das Befestigungselement 904 wird mit einem Teil seiner Federabschnitte 913 zwischen den beiden Wandabschnitten 23, 24 aufgenommen, wobei die Rastnasen 23 in den Durchlass 27 des Federabschnitts 913 eingreifen.

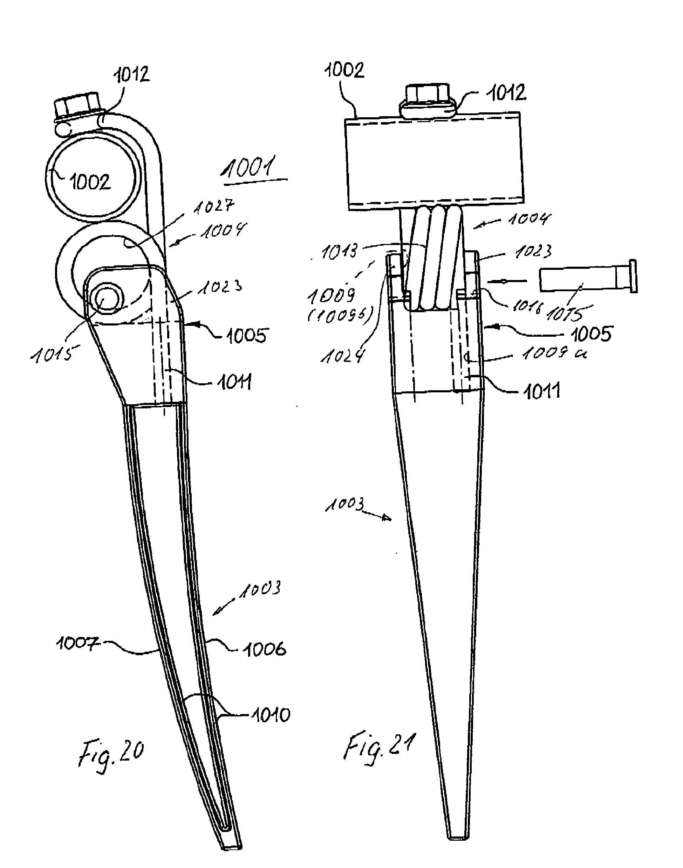

Die erfindungsgemäße etfte Ausführungsform eines Zinkens 1001 gemäß Figuren 20 und 21 unterscheidet sich von der zehnten Ausführungsform lediglich dadurch, dass anstelle der Rastarme 25 und Rastnasen 26 ein Befestigungsbolzen 1015 in Form eines Steckbolzens oder einer Schraube gewählt wurde, der in Bohrungen 1016 in den beiden Wandabschnitten 1023, 1024 des Greifelements 1003 festlegbar ist und den Durchlass 1027 des Befestigungselements 1004 passiert.

### Bezugszeichenliste

- 901, 1001: Zinken
- 902, 1002: Tragkörper
- 903, 1003: Greifelement
- 904, 1004: Befestigungselement
- 905, 1005: erstes Ende, verdickter Abschnitt
- 906, 1006: konkave Seite
- 907, 1007: konvexe Seite

- 909, 1009: Ausnehmung
- 909a, 1009a: erster Ausnehmungsabschnitt
- 909b, 1009b: zweiter Ausnehmungsabschnitt
- 910, 1010: Profilierungen
- 911, 1011: Verbindungsabschnitt
- 912, 1012: Befestigungsabschnitt
- 913, 1013: Federabschnitt
- 1015: Befestigungsmittel, Schraube, Befestigungsbolzen
- 1016: Bohrungen

- 923, 1023: erster Wandabschnitt
- 924, 1024: zweiter Wandabschnitt
- 25: Rastarm
- 26: Rastnase
- 1027: Durchlass

## Patentansprüche

1. Zinken (901, 1001) für ein landwirtschaftliches Gerät oder eine Arbeitsmaschine zur Anbringung an einem Tragkörper (902, 1002) umfassend
- ein separates Greifelement (903, 1003), das aus einem Kunststoff besteht,
- ein separates Befestigungselement (904, 1004), das
- mit dem Greifelement (903, 1003) verbunden ist,
- aus einem Federstahl besteht,
- einen Verbindungsabschnitt (911, 1011) aufweist, der mit dem Greifelement (903, 1003) verbunden ist,
- einen Befestigungsabschnitt (912, 1012) aufweist, der zur Befestigung am Tragkörper (902, 1002) dient,
- einen elastisch federnden Federabschnitt (913, 1013) aufweist,
wobei das Befestigungselement (904, 1004) aus einem Draht gebildet ist, wobei im Federabschnitt (913, 1013) der Draht eine Wendel bildend gewunden ist,
**dadurch gekennzeichnet,**
**dass** der Federabschnitt (913, 1013) zwischen Befestigungsabschnitt (912, 1012) und Verbindungsabschnitt (911, 1011) angeordnet ist,
**dass** von beiden Enden der Wendel abstehende Drahtabschnitte, nämlich ein erster Drahtabschnitt und ein zweiter Drahtabschnitt, vorhanden sind, von denen der erste Drahtabschnitt den Befestigungsabschnitt (912, 1012) bildet, und dass der zweite Drahtabschnitt den Verbindungsabschnitt bildet und zusammen mit dem Federabschnitt zur Verbindung mit dem Greifelemente (903, 1003) dient.

2. Zinken nach Anspruch 1,
**dadurch gekennzeichnet,**
**dass** der Verbindungsabschnitt (911, 1011) sich über einen Teil der Länge des Greifelements (903, 1003) erstreckt und in dieses eingebettet und damit unlösbar verbunden ist.

3. Zinken nach Anspruch 1,
**dadurch gekennzeichnet,**
**dass** das Greifelement (903, 1003) mit dem Verbindungsabschnitt (911, 1011) des Befestigungselementes (904, 1004) lösbar verbunden ist.

4. Zinken nach Anspruch 1,
**dadurch gekennzeichnet,**
**dass** das Greifelement (903, 1003) an einem Ende eine Ausnehmung (909, 1009) aufweist, in welche der Verbindungsabschnitt (911, 1011) eingreift und in welcher er über Befestigungsmittel lösbar gehalten ist.

5. Zinken nach Anspruch 4,
**dadurch gekennzeichnet,**
**dass** die Ausnehmung (909, 1009) einen ersten Ausnehmungsabschnitt (909a, 1009a), in den der Drahtabschnitt (911, 1011) eingreift, und einen zweiten Ausnehmungsabschnitt (909b, 1009b), in welchen die den Federabschnitt (913, 1013) bildende Wendel zumindest teilweise aufgenommen ist, umfasst.

6. Zinken nach Anspruch 5,
**dadurch gekennzeichnet,**
**dass** der zweite Aufnahmeabschnitt (909b, 1009b) den Federabschnitt (913, 1013) an dessen Enden quer zur Erzeugungsachse der Wendel durch Wandabschnitte (923, 924, 1023, 1024) hält.

7. Zinken nach Anspruch 6,
**dadurch gekennzeichnet,**
**dass** die Wandabschnitte (1023, 1024) jeweils eine Bohrung (1016) aufweisen, durch die und den Federabschnitt hindurch ein Befestigungsbolzen (1015) geführt ist.

8. Zinken nach Anspruch 7,
**dadurch gekennzeichnet,**
**dass** der Befestigungsbolzen (1015) durch eine Schraube mit oder ohne Mutter dargestellt ist.

9. Zinken nach Anspruch 6,
**dadurch gekennzeichnet,**
**dass** die Wandabschnitte (923, 924) federnde Rastarme (25) aufweisen oder bilden, die Rastnasen (26) zum Eingriff mit dem Federabschnitt (913) besitzen.

10. Zinken nach Anspruch 4,
**dadurch gekennzeichnet,**
**dass** der Draht zur Bildung des Verbindungsabschnitts (911, 1011) U-förmig gebogen ist und eine Schraube (1015) oder Stift vorgesehen sind, die zwischen den beiden ein U bildenden Schenkeln hindurchtreten und in Bohrungen des Greifelementes (903, 1003), die Ausnehmung, die taschenförmig gestaltet ist, durchquerend, sitzen.

11. Zinken nach Anspruch 1,
**dadurch gekennzeichnet,**
**dass** der Befestigungsabschnitt (912, 1012) des Befestigungselementes (904, 1004) dadurch gebildet ist, dass der Draht eine Öse bildend gebogen ist.

12. Zinken nach einem der Ansprüche 1 bis 11,
**dadurch gekennzeichnet,**
**dass** das Greifelement (903, 1003) gebogen ist und eine konvexe Seite (907, 1007) und eine konkave Seite (906, 1006) bildet.

13. Zinken nach einem der Ansprüche 4 bis 10,
**dadurch gekennzeichnet,**
**dass** die Ausnehmung (909, 1009) sich in einem verdickten Abschnitt (905, 1005) des Greifelementes (903, 1003) befindet.

14. Zinken nach Anspruch 12,
**dadurch gekennzeichnet,**
**dass** das Greifelement (903, 1003) Profilierungen (910, 1010) aufweist.

15. Zinken nach einem der Ansprüche 1 bis 14,
**dadurch gekennzeichnet,**
**dass** das Greifelement (903, 1003) stabförmig ausgebindet ist.

16. Zinken nach einem der Ansprüche 1 bis 14,
**dadurch gekennzeichnet,**
**dass** das Greifelement nach Art eines Paddelblattes flächig gestaltet ist.

## Claims

1. Tine (901, 1001) for an agricultural implement or a working machine for attachment on a carrier body (902, 1002), comprising
- a separate gripping element (903, 1003), made from plastic,
- a separate attachment element (904, 1004), which
- is connected to the gripping element (903, 1003),
- is made from a spring steel,
- has a connection portion (911, 1011), which is connected to the gripping element (903, 1003),
- has an attachment portion (912, 1012), serving for the attachment on the carrier body (902, 1002),
- has a resilient spring portion (913, 1013),
wherein the attachment element (904, 1004) is formed from a wire, wherein the wire is wound in the spring portion (913, 1013) forming a coil,
**characterised in**
**that** the spring portion (913, 1013) is arranged between the attachment portion (912, 1012) and the connection portion (911, 1011),
**that** wire portions are provided, projecting from both ends of the coil, namely a first wire portion and a second wire portion, of which the first wire portion forms the attachment portion (912, 1012) and
**that** the second wire portion forms the connection portion and serves together with the spring portion for connection to the gripping element (903, 1003).

2. Tine according to claim 1,
**characterised in**
**that** the connection portion (911, 1011) extends across a portion of the length of the gripping element (903, 1003) and is embedded therein and is non-detachably connected thereto.

3. Tine according to claim 1,
**characterised in**
**that** the gripping element (903, 1003) is detachably connected to the connection portion (911, 1011) of the attachment element (904, 1004).

4. Tine according to claim 1,
**characterised in**
**that** the gripping element (903, 1003) has at one end a recess (909, 1009), in which the connection portion (911, 1011) engages and in which it is detachably held by attachment means.

5. Tine according to claim 4,
**characterised in**
**that** the recess (909, 1009) comprises a first recess portion (909a, 1009a), in which the wire portion (911, 1011) engages, and a second recess portion (909b, 1009b), in which the coil, forming the spring portion (913, 1013), is at least partially accommodated.

6. Tine according to claim 5,
**characterised in**
**that** the second recess portion (909b, 1009b) holds the spring portion (913, 1013) at its ends transversally to the generating axis of the coil by means of wall portions (923, 924, 1023, 1024).

7. Tine according to claim 6,
**characterised in**
**that** the wall portions (1023, 1024) each have a bore (1016) and that an attachment bolt (1015) is passed through the bore and through the spring portion.

8. Tine according to claim 7,
**characterised in**
**that** the attachment bolt (1015) is represented by a screw with or without nut.

9. Tine according to claim 6,
**characterised in**
**that** the wall portions (923, 924) have or form resilient locking arms (25), which have locking projections (26) for the engagement in the spring portion (913).

10. Tine according to claim 4,
**characterised in**
**that** the wire is bent U-like for forming the connection portion (911, 1011) and that a screw (1015) or pin is provided, which pass between the two U-like legs and rest in bores of the gripping element (903, 1003) and crossing the recess, formed pocket-like.

11. Tine according to claim 1,
**characterised in**
**that** the attachment portion (912, 1012) of the attachment element (904, 1004) is formed by bending the wire to an eyelet.

12. Tine according to one of claims 1 to 11,
**characterised in**
**that** the gripping element (903, 1003) is bent and forms a convex side (907, 1007) and a concave side (906, 1006).

13. Tine according to one of claims 4 to 10,
**characterised in**
**that** the recess (909, 1009) is arranged in an enlarged portion (905, 1005) of the gripping element (903, 1003).

14. Tine according to claim 12,
**characterised in**
**that** the gripping element (903, 1003) has projections (910, 1010).

15. Tine according to one of claims 1 to 14,
**characterised in**
**that** the gripping element (903, 1003) is formed rod-like.

16. Tine according to one of claims 1 to 14,
**characterised in**
**that** the gripping element is formed 2-dimensional like a paddle blade.

## Revendications

1. Dent (901, 1001) pour un appareil agricole ou une machine de travail pour monter sur un corps porteur (902, 1002) comprenant
- un élément de préhension (903, 1003) séparé fait en plastique
- un élément de fixation (904, 1004) séparé qui
- est rélié à l'élément de préhension (903, 1003),
- est en acier pour ressort,
- présente une section de raccordement (911, 1011) qui est reliée à l'élément de préhension (903, 1003),
- présente une section de fixation (912, 1012) qui sert à la fixation sur un corps porteur (902, 1002)
- présente un section à ressort (913, 1013) agissant de façon élastique, l'élément de fixation (904, 1004) étant constitué d'un fil, le fil étant enroulé formant une spirale dans la section à ressort (913, 1013) formant une spirale **caractérisée en ce que** la section à ressort (913, 1013) est disposée entre la section de fixation (912, 1012) et la section de raccordement (911, 1011), **en ce qu'**il y a des sections de fil, notamment une première section de fil et une deuxième section de fil, partant des deux extrémités de la spirale, à partir desquelles la première section de fil forme la section de fixation (912, 1012) et **en ce que** la deuxième section de fil forme la section de raccordement et sert ensemble avec la section à ressort pour raccorder à l'élément de préhension (903, 1003).

2. Dent selon la revendication 1 **caractérisée en ce que** la section de raccordement (911, 1011) s'étend sur une partie de la longueur de l'élément de préhension (903, 1003) et est encastrée dans celui-ci et est de ce fait raccordé de façon indétachable.

3. Dent selon la revendication 1 **caractérisée en ce que** l'élément de préhension (903, 1003) est raccordé de façon détachable à la section de raccordement (911, 1011) de l'élément de fixation (904, 1004).

4. Dent selon la revendication 1 **caractérisée en ce que** l'élément de préhension (903, 1003) présente à une extrémité un évidement (909, 1009) dans lequel vient en prise la section de raccordement (911, 1011) et dans lequel elle est maintenue détachable par la section de fixation.

5. Dent selon la revendication 4 **caractérisée en ce que** l'évidement (909, 1009) comprend une première section d'évidement (909a, 1009a) dans laquelle la section de fil (911, 1011) vient en prise et une deuxième section d'évidement (909b 1009b) dans laquelle la spirale formant la section de ressort est au moins partiellement logée.

6. Dent selon la revendication 5 **caractérisée en ce que** la deuxième section de réception (909b, 1009b) maintient la section de ressort (913, 1013) à ses extrémités transversalement à l'axe de production de la spirale par les sections de paroi (923, 924, 1023, 1024).

7. Dent selon la revendication 6 **caractérisée en ce que** les section de paroi (1023, 1024) présente respectivement un alésage (1016) à travers lequel et la section de ressort est passé un boulon de fixation (1015).

8. Dent selon la revendication 7 **caractérisée en ce que** le boulon de fixation (1015) est représenté par une vis avec ou sans écrou.

9. Dent selon la revendication 6 **caractérisée en ce que** les sections de parois (923, 924) présentent ou forment des bras d'encliquetage (25) élastiques, qui possèdent des ergots d'encliquetage (26) pour engrènement avec la section à ressort (913).

10. Dent selon la revendication 4 **caractérisée en ce que** le fil pour former la section de raccordement (911, 1011) est plié en forme de U et qu'une vis (1015) ou une tige sont prévues qui passent à travers entre les deux branches formant un U et mettent en place de façon traversante dans les alésages de l'élément de préhension (903, 1003), l'évidement qui est constitué en forme de poche.

11. Dent selon la revendication 1 **caractérisée en ce que** la section de fixation (912, 1012) de l'élément de fixation (904, 1004) est constituée de telle sorte que le fil est plié en formant une boucle.

12. Dent selon une quelconque des revendications 1 à 11 **caractérisée en ce que** l'élément de préhension (903, 1003) est plié et forme un côté convexe (907, 1007) et un côté concave (906, 1006).

13. Dent selon une quelconque des revendications 4 à 10 **caractérisée en ce que** l'évidement (909, 1009) se trouve dans une section (905, 1005) épaissie de l'élément de préhension (903, 1003).

14. Dent selon la revendication 12 **caractérisée en ce que** l'élément de préhension (903, 1003) présente des profilages (910, 1010).

15. Dent selon une quelconque des revendications 1 à 14 **caractérisée en ce que** l'élément de préhension (903, 1003) est constitué en forme de bâton.

16. Dent selon une quelconque des revendications 1 à 14 **caractérisée en ce que** l'élément de préhension est conçu plan à la façon d'une palette.
